# EUROPEAN PATENT SPECIFICATION

(11) **EP 2 134 529 B1**
(45) Date of publication and mention of the grant of the patent: **03.08.2011**
(21) Application number: 08736835.3
(22) Date of filing: 14.04.2008
(51) Int. Cl.: B29C 47/90

(54) **CALIBRATOR**
KALIBRATOR
DISPOSITIF D'ETALONNAGE

(30) Priority: 13.04.2007 FI 20070284
(43) Date of publication of application: 23.12.2009
(73) Proprietor: Oy KWH Pipe AB, 65101 Vaasa (FI)
(72) Inventor: BLOMQVIST, Gunnar, FI-65520 Helsingby (FI)
(74) Representative: Sundman, Patrik Christoffer
(86) International application number: PCT/FI2008/050186
(87) International publication number: WO 2008/125734

(56) References cited:
- EP-A- 1 346 814
- WO-A-00/16962
- US-A- 4 355 966
- US-A1- 2005 133 944
- DATABASE WPI Week 200211 Thomson Scientific, London, GB; AN 2002-078592 XP002495022 -& JP 2001 287258 A (SEKISUI CHEM IND CO LTD) 16 October 2001 (2001-10-16)

## Description

The present invention relates to a calibrator which is used for the manufacturing of extruded hollow thermoplastic profiles which typically have a rectangular cross-section, and which calibrator has a stationary framework supporting a large number of lamellar calibrator plates which are arranged at a distance from each other in such a way that together they form a channel that goes through the calibrator, the cross-section of which channel determines the outer shape of the thermoplastic profile to be manufactured. EP 1 346 814, US 2005 0133944, JP 2001287258 and WO 0016962 show known calibrator designs. A disadvantage of conventional calibrators is that they must be replaced every time a thermoplastic profile which has another dimension is to be manufactured. This replacement is fairly laborious and troublesome because not only is the calibrator rather long but also it is installed in a calibrator tank of limited size, from which tank the calibrator, when the profile dimension is changed, must be first screwed off and lifted out and then replaced with another calibrator which has been modified to fulfil the dimension of the new profile that is to be manufactured.

The purpose of the present invention is to solve and possibly totally eliminate the abovementioned disadvantage. This is accomplished by way of a calibrator according to claim 1.

According to one simple and affordable application, every calibrator plate has a central rectangular gap that determines the maximum dimension and shape of the cross-section of the calibrator channel, in which case one of the side walls of the gap is determined by a rod which is moveable either in the plane of the calibrator plate or parallel to the same, and moveable both in the direction towards and away from the side wall opposite the gap. This makes it possible to vary the dimension of the thermoplastic profile in the direction of movement of the rod.

According to another form of the application, every second calibrator plate is stationary and has a central rectangular gap, and at the same time every other plate is constructed of a pair of parallel rods each one of which is moveable both in the direction towards and away from the other, which makes it possible to adjust the height or the width of the calibrator channel. If the above-mentioned rods, which are moveable both towards and away from each other, are arranged such that they can be simultaneously moved a distance which is equal in both directions, it is ensured that the central axis of the manufactured thermoplastic profile, regardless of dimension and shape, will remain unmoved in relation to both the outlet and the inlet of the calibrator tank.

Consequently, it is possible to use the calibrator for the manufacturing of thermoplastic profiles which possess different dimensions. This in turn considerably facilitates the transition from one profile dimension to another.

In order to ensure that all the moveable rods which determine the position of one of the walls of the channel are moved both simultaneously and the same distance, these rods are fixed at their ends to form a unit by way of the help of a couple of bars which are placed alongside the calibrator. By binding together the two units of vertical rods and/or the two units of horizontal rods with mechanisms that allow adjustment of the internal distances between both of the pairs, a synchronized movement of the walls of the channel is made possible.

Those mechanisms which interconnect the two parallel units of rods, either the horizontal or the vertical rods, comprise typically at least two parallel adjusting screws inserted into two threaded holes, one in each of the units, mainly in their longitudinal bar and housed in the stationary frame of the calibrator, which adjusting screws in half of their length are equipped with right-hand threads, and in the other half of their length are equipped with left-hand threads, and that both of the adjusting screws, which manipulate a parallel pair of rod units, are arranged such that they are operated by a shared operating mechanism, such as a crank or a wheel, which operates both adjusting screws simultaneously in such a manner that the distance between the two bound units is adjusted simultaneously on both sides of the calibrator. This can be accomplished for instance by first attaching the operating mechanism directly to one of the adjusting screws and then linking both adjusting screws with a belt or a chain which is led over two equal-sized belt pulleys or cogwheels, which are attached at the end of each adjusting screw in such a way that they are able to withstand strong torsion. Alternatively, it is possible to attach the operating mechanism to a transverse elongated axis which is equipped with a pair of conical cogwheels, which are arranged such that each of them interacts with a corresponding conical cogwheel, which is also attached at the end of each pair of adjusting screws in such a way that it is able to withstand strong torsion.

According to a preferred embodiment, each pair of parallel units of rods is manipulated by three pairs of adjusting screws which are arranged, one near each end and a third in the middle of the pair of parallel units. In this way, it is possible to fine-tune the distance between a pair of parallel units along the length of the calibrator in such a way that a smooth contact between the thermoplastic profile and the calibrator plate is achieved along the whole length of the calibrator plate, and a desired shape of the thermoplastic profile is generated as it is extruded out of the calibrator.

By designing the rods in the unit that determines the shape of the lower side of the channel, by using a middle section which is arched downwards, the outer bottom wall of thermoplastic profile that is led through the calibrator is rounded. A shape such as this has proven to be advantageous for a thermoplastic profile intended for use in the manufacturing of spirally wound pipes.

The calibrator is preferably inserted into a vacuum calibrator tank, the inner side walls of which are equipped with a large number of spray nozzles which spray cooling water and which are directed at the space in between the calibrator plates, i.e. between the transverse rods in each of the four units, and which spray is used for cooling a hollow thermoplastic profile, which profile, after coming out of the extruding die is led through the calibrator which is located in the abovementioned calibrator tank. On the outer side of one of the side walls of the vacuum calibrator tank, the mechanism for manipulating each pair of adjusting screws are arranged, which makes it possible to operate the calibrator quickly and easily. By this means, the mechanisms for manipulating a pair of horizontal units are attached directly to the end of one of the adjusting screws in each respective pair, while the mechanisms for manipulating the pair of vertical units are attached to the end of a transverse axis which is equipped with a cogwheel, which axis co-operates with the corresponding cogwheel at the ends of the adjusting screws of each pair. A further advantage is that this reduces the likelihood of an industrial accident, because, during the changing of the dimension of the thermoplastic profile to be manufactured in the production line in question, it is no longer necessary to lift out a calibrator unit from the calibrator tank and replace it with another unit.

The vacuum calibrator tank, which is arranged in the production line directly after the extruding die, has an inlet for the extruded thermoplastic profile. In addition, arranged in the said inlet is a cooling ring which has a cooling mantle and also a means to generate a vacuum between the thermoplastic profile and the cooling ring that is greater than the vacuum that is maintained in the vacuum calibrator tank.

In addition, directly after the inlet leading to the vacuum calibrator tank, it is possible to install a water cooling bath together with a replaceable calibrator of a fixed dimension. However, this replaceable calibrator is substantially shorter than the variable calibrator.

In order to further facilitate the adjusting of the variable calibrator, a position indicator is arranged in association with every manipulating mechanism, which indicator shows in millimetres the distance between the pair of units of rods which are operated by the manipulating mechanism in question.

It is also possible to adjust the calibrator plates automatically, with the help of microprocessors.

In the following, the present invention will be examined more closely with the help of the accompanying drawing, in which:
Figure 1 shows a diagram of the last section of the production line for manufacturing a hollow thermoplastic profile; this production line includes a calibrator, according to the present invention;
Figure 2 shows a diagram of the first embodiment used for the adjusting of the distance between the units of parallel calibrator plates;
Figure 3 shows a diagram of the second embodiment used for the adjusting of the distance between the units of parallel calibrator plates;
Figure 4 shows a schematic end view of the calibrator according to the present invention, which calibrator is inserted into the calibrator tank;
Figure 5 shows a schematic perspective drawing of the calibrator and the calibrator tank, according to Figure 4;
Figure 6 shows a perspective drawing of a prototype of the vacuum calibrator tank for housing the calibrator, according to the present invention.
figures 7a and 7b show diagrams of the end view of the calibrator according to the present invention, which calibrator has an adjustable calibrator plate on one of the short sides of the rectangular calibrator channel of the calibrator, in two different positions, and
figures 8a and 8b show a corresponding diagram of the calibrator, which calibrator has an adjustable calibrator plate on one of the long sides of the rectangular calibrator channel of the calibrator, in two different positions.

A production line for manufacturing of a hollow thermoplastic profile (1) with a typically rectangular cross-section comprises an extruding die (2), a calibrator tank (3) which is arranged directly after the extruding die (2) and which comprises a calibrator (4, 4a) for the final design of the extruded thermoplastic profile (1), which, at the same time, is cooled by means of a large number of cooling water spray-nozzles (5) which are arranged along the inner walls of the calibrator tank (3) and which are directed towards said thermoplastic profile (1) during the time that this profile is led through the calibrator tank (3). Because of the relatively high speed at which the thermoplastic profile (1) comes out of the extruding die (2), a relatively long calibrator (4, 4a) is needed to allow the thermoplastic material to solidify adequately before the thermoplastic profile (1) leaves the calibrator, which in turn avoids deformation of the thermoplastic profile (1) while the profile is still partly in a plastic state. If additional cooling of the thermoplastic profile (1) is desired, it is possible to add to the calibrator tank (3) one or more extra calibrators and/or cooling water tanks (6). When manufacturing hollow thermoplastic profiles (1) which typically have a rectangular cross-section, a calibrator having a stationary frame (7) is used, one which supports a large number of lamellar calibrator plates (S) which, in turn, are arranged at a distance from each other in such a way that together they form a channel (K) that passes through the calibrator (4, 4a), the cross-section of which channel determines the outer shape of the thermoplastic profile (1) to be formed.

At least one of the walls of the channel (K) of the calibrator (4) is delimited by a moveable part (8, 9) of the calibrator plate (S), which part is adjustable in a perpendicular direction to the channel, in order to adapt the calibrator (4) to thermoplastic profiles (1) of different height/width ratios. In addition to the above, this offers the extra means to modify the ring stiffness of a pipe which is to be manufactured from the thermoplastic profile, which stiffness may be requested by a client.

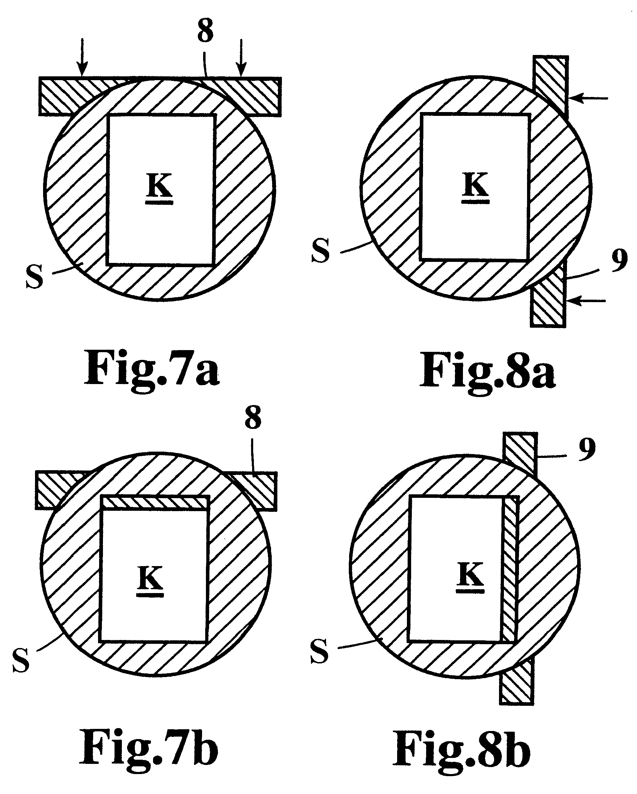

In the embodiment according to figures 7a and 7b, the calibrator (4) comprises stationary calibrator plates (S) each having a rectangular gap which determines the maximum dimension and also the shape of the cross-section of the calibrator channel (K), in which case the position of the upper side wall of the gap, in this case one of its short sides, is determined by a rod (8) which is vertically moveable either in the plane of the calibrator plate (S) or parallel to the same, both in the direction towards and away from the side wall which is opposite the gap. In figure 7a, the rod is situated at its outermost end position and in figure 7b the rod (8) is situated in a lowered position, which results in a calibrator channel (K) with a lower height or shorter long side.

In the embodiment according to figures 8a and 8b, the calibrator (4) has similar stationary calibrator plates (S) as in the abovementioned case, but in this embodiment one of the vertical side walls of the gap, in this case one of its long side walls, is determined by an adjustable and moveable rod (9). In figure 8a, the rod (9) is in its outermost end position, whereas in figure 8b the rod is in a retracted position, which results in a calibrator channel (K) with a reduced width or shorter short side.

According to an embodiment which is not shown here, it is possible to arrange the calibrator in such a way that every second calibrator plate (S) is stationary, and at the same time has a central rectangular gap, and every other plate comprises a pair of parallel rods (8, 8a; 9, 9a) which can be moved both towards and away from each other, which makes it possible to vary either the width or the height of the calibrator channel (K) without the central longitudinal axis of the calibrator channel (K) being moved. As a result, the thermoplastic profile (1) produced follows a straight line course throughout the manufacturing line.

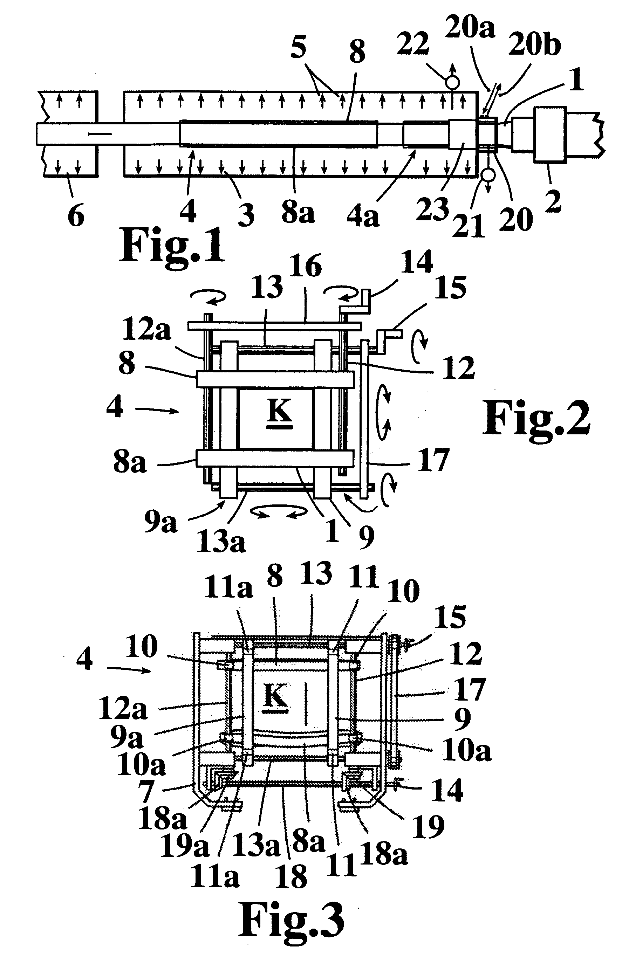

According to a preferred embodiment, the calibrator (4) is arranged such that every second calibrator plate comprises a pair of horizontal rods (8, 8a) which can be moved both towards and away from each other, and every other plate calibrator plate comprises a pair of vertical rods (9, 9a) which can be moved both towards and away from each other, in order to adapt the calibrator to the production of thermoplastic profiles (1) of different height and width, as shown in figures 2-5. All the moveable rods 8, 8a, 9 and 9a, which determine the position of one of the walls of the channel (K), are attached at their ends to each other to form a unit by way of the help of a pair of bars (10, 10a, 11 and 11a) which lie longitudinally along the calibrator.

Both units of vertical rods (9, 9a) and also both units of horizontal rods (8, 8a) are preferably attached to each other with mechanisms that allow the adjusting of the distance between them. This makes it possible to adjust the two units simultaneously by using the horizontal rods (8, 8a) and the two units of vertical rods (9, 9a), respectively.

The mechanisms which attach the two parallel units of rods (8, 8a and 9, 9a, respectively) to each other comprise preferably at least two parallel adjusting screws (12, 12a; 13, 13a) which are inserted into threaded holes in the two calibrator plates (8, 8a and 9, 9a, respectively), and also into a longitudinal bar (10, 10a and 11, 11a, respectively), and which are housed in the stationary frame (7) of the calibrator. The adjusting screws (12, 12a and 13, 13a) are equipped in half of their length with right-hand threads, and in the other half of their length they are equipped with left-hand threads. In addition, both of the adjusting screws (12, 12a and 13, 13a, respectively), which manipulate one of the parallel pairs of rods (8, 8a and 9, 9a, respectively), are arranged such that they are operated by a shared operating mechanism (14 and 15, respectively).

According to a preferred embodiment, each parallel pair of rods (8, 8a and 9, 9a, respectively), is operated by three pairs of adjusting screws (12, 12a and 13, 13a, respectively) which are arranged one next to each end and a third in the middle of the pair of parallel units (8, 8a and 9, 9a, respectively).

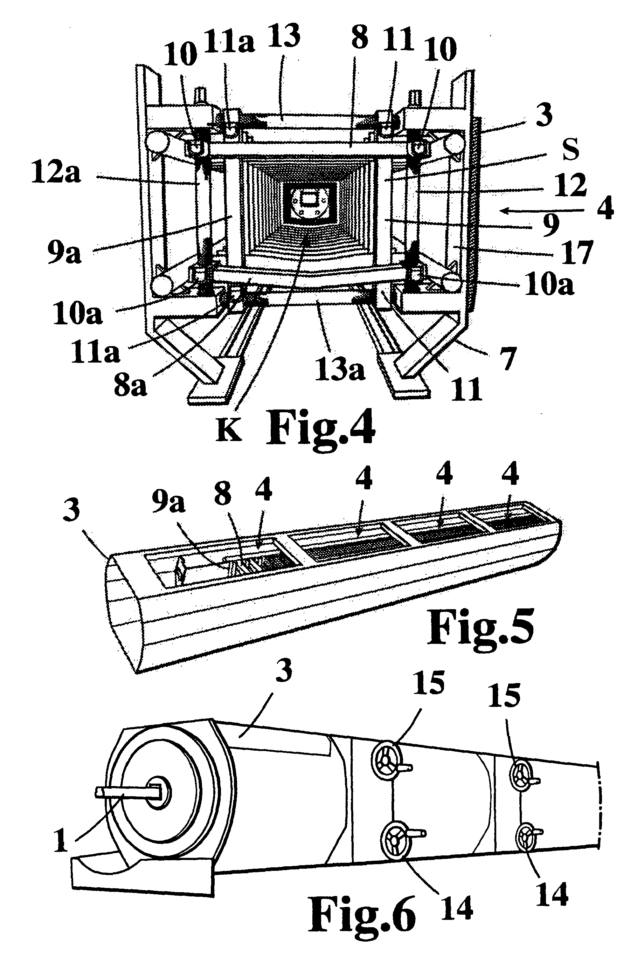

In the embodiments according to figures 3 and 4, in the unit which determines the position of the bottom part of the channel (K), the rods (8a) form a middle part which is arched downwards. As a result, the outer bottom wall of thermoplastic profile (1) that is led through the calibrator (4) is rounded.

The mechanism for the manipulating (14, 15) of a pair of adjusting screws (12, 12a and 13, 13a, respectively) preferably comprises a crank, as shown in figure 2, or a wheel, as shown best in figure 6. In the embodiment according to figure 2, both of the manipulating mechanisms (14, 15) are attached directly to the end of the respective adjusting screws (12 and 13, respectively) that is in the upper right-hand corner of the calibrator (4). Each of the adjusting screws (12 and 13, respectively) is attached to the corresponding other adjusting screw (12a and 13a, respectively) of the pair via a belt or a chain (16 and 17, respectively) which is led over two equal-sized belt pulleys or cogwheels which are attached near the end of each adjusting screw (12, 12a, 13, 13a) in such a way that they can withstand strong torsion. By turning the crank (14 and 15, respectively) in one direction, each of the parallel pairs of rods (8, 8a and 9, 9a, respectively) are moved towards the other, and by turning the crank (14 and 15, respectively) in the opposite direction, each of the same pair of parallel units are moved in a direction away from the other.

In the embodiment according to figure 3, the pair of the units that have vertical rods (9, 9a) are operated by the manipulating mechanism (15) that is attached to the end of the adjusting screw (13), which, via the belt (17), is attached to the adjusting screw (13a), and which belt (17), in turn, is led over two equal-sized belt pulleys which are next to the ends of the two adjusting screws (13, 13a). The units with the horizontal rods (8, 8a) are, in turn, operated by the manipulating mechanism (14) which is arranged at the end of a transverse elongated axis (18) which is equipped with two equal-sized conical cogwheels (18a) which, in turn, are arranged to co-operate with the corresponding conical cogwheel (19, 19a) at the end of the adjusting screws (12 and 12a).

The calibrator (4) is preferably inserted into a vacuum calibrator tank (3), the inner side walls of which are equipped with a large number of cooling water spray-nozzles (5) which are directed in between the calibrator plates (S), i.e. between the transverse rods (8, 8a, 9, 9a) of the four units, and towards the outer walls of the thermoplastic profile (1) which is led through the calibrator (4). The mechanisms (14, 15) for manipulating all of the pairs of adjusting screws (12, 12a; 13, 13a) of the calibrator are arranged on the outer side of one of the side walls of the vacuum calibrator tank (3), as shown in figure 6.

At the point at which the thermoplastic profile (1) is fed into the vacuum calibrator tank (3), there is preferably arranged a cooling ring (20) which is designed to initially cool down the thermoplastic profile (1) after the profile has come out of the extruding die (2) in such a manner that the plasticity of the profile is decreased. For this purpose, the cooling ring (20) has a cooling mantle, through which the circulation of a cooling medium is arranged, as the arrows (20a and 20b) show in figure 1. In addition, the cooling ring (20) has a means (21) in order to maintain a vacuum between the thermoplastic profile (1) and the inner wall of the cooling ring (20), which vacuum is stronger, for instance -0.85 bar, than the vacuum, for instance 0.2 bar, which is maintained inside the vacuum calibrator tank (3) by using a different means (22). The stronger vacuum in the cooling ring ensures that the vacuum calibrator tank (3) is sufficiently sealed, and, at the same time, ensures that the outer surfaces of the thermoplastic profile are exactly moulded to fit the inner form of the cooling ring (20). By adjusting the vacuum in the cooling ring (20), the sliding friction between the thermoplastic profile (1) and the cooling ring (20) can be adjusted, too, which affects both the surface quality of the thermoplastic profile (1) and the pulling force which the thermoplastic profile (1) is submitted to when it is pulled through the calibrator (4). The purpose of the vacuum inside the vacuum calibrator tank (3) is to suck the outer walls of the thermoplastic profile (3) against the calibrator plates (8, 8a, 9, 9a) as closely as possible such that the thermoplastic profile exhibits a smooth and precisely dimensioned outer shape when it comes out of the vacuum calibrator tank (3).

According to the embodiment shown in figure 1, when entering the vacuum calibrator tank (3), the thermoplastic profile is guided first to run through a water cooling bath (23) to effectively cool the thermoplastic profile (1), and thereafter to run through a short replaceable calibrator (4) which has fixed dimensions, whereafter the profile is guided to enter the adjustable calibrator (4), according to the present invention.

In association with every manipulating mechanism (14, 15) a position indicator (not shown) is preferably arranged, which indicator shows the distance in millimetres between the rods (8, 8a and 9, 9a, respectively) in the pair which is adjusted by the manipulating mechanism (14, 15) in question. By means of the manipulating mechanism (15), it is possible to adjust the width of the thermoplastic profile (1), for instance to within the range of 30 mm - 125 mm, and similarly with the manipulating mechanism (14) it is possible to adjust the height of the thermoplastic profile, for instance to within the range of 40 mm - 190 mm. While the calibrator is being adjusted, the vacuum inside the vacuum calibrator tank must be lowered, to ensure that it does not exceed -0.05 bar.

## Claims

1. A calibrator to be used for the production of extruded hollow thermoplastic profiles (1) which mainly have a rectangular cross-section, which calibrator has a stationary framework (7) which, in turn, supports a large number of lamellar calibrator plates (S) which are arranged at a distance from each other in such a way that together they form a channel (K) that goes through the calibrator, the cross-section of which channel determines the outer shape of the thermoplastic profile (1) to be manufactured, wherein at least one of the walls of the channel (K) is delimited by a moveable part (8; 9) of the calibrator plate (S), the part being adjustable in a perpendicular direction to the channel, in order to adapt the calibrator (4) to thermoplastic profiles (1) which have different height/width ratios, **characterized in that**
- every second calibrator plate comprises a pair of horizontal rods (8, 8a) which can be moved both towards and away from each other, and
- every other calibrator plate comprises a pair of vertical rods (9, 9a) which can be
moved both towards and away from each other,
in order to adapt the calibrator to production of thermoplastic profiles (1) of different height and width.

2. The calibrator according to Claim 1, **characterized in that** each calibrator plate (S) has a central rectangular gap that determines the maximum dimension and shape of the cross-section of the calibrator channel (K), in which case one of the side walls of the gap is determined by a rod (8; 9) which is moveable in the plane or parallel to the plane of the calibrator plate (S), in the direction towards and from the side wall opposite to the gap.

3. The calibrator according to Claim 2, **characterized in that** all the moveable rods (8, 8a, 9, 9a), which determine the position one of the walls of the channel (K), are fixed at their ends to form units by means of a couple of bars (10, 10a, 11, 11a) which are placed alongside the calibrator.

4. The calibrator according to Claim 3, **characterized in that** both units of vertical rods (9, 9a) and/or both units of horizontal rods (8, 8a) are bound together with mechanisms which allow adjusting of the distance between the two units.

5. The calibrator according to Claim 4, **characterized in that** the abovementioned mechanisms, which bind together the two parallel units of rods (8, 8a; 9, 9a) comprise at least two parallel adjusting screws (12, 12a; 13, 13a) which are inserted into two threaded holes in the longitudinal bars (10, 10a; 11, 11a) of both units and housed in the stationary frame (7) of the calibrator, which adjusting screws (12, 12a; 13, 13a), in one half of their length, are equipped with right-hand threads and, in the other half of their length, are equipped with left-hand threads, and that both of the adjusting screws (12, 12a; 13, 13a), which manipulate a parallel pair of rod units (8, 8a; 9, 9a), are arranged such that they are operated by a shared operating mechanism (14 and 15, respectively).

6. The calibrator according to Claim 5, **characterized in that** each pair of parallel units of rods (8, 8a; 9, 9a) are manipulated by three pairs of adjusting screws (12, 12a; 13, 13a) which are arranged one next to each end and a third in the middle of the pair of parallel units.

7. The calibrator according to Claim 1, **characterized in that** the rods (8a) in the unit that determines the lower side of the channel (K) form a middle part which is arched downwards and, as a result, the outer bottom wall of thermoplastic profile (1) that is led through the calibrator (4) is rounded.

8. The calibrator according to Claim 5, **characterized in that** the mechanism for the manipulating (14, 15) of a pair of adjusting screws (12, 12a; 13, 13a) comprises a crank or a wheel, which is either directly attached to one of the adjusting screws (12; 13), which, in turn, is attached to the other adjusting screw (12a; 13a) via a belt or a chain which is led over equal-sized belt pulleys or cogwheels, which are attached near the end of each adjusting screw (12, 12a, 13, 13a), in such a way that they can withstand strong torsion, or attached to a transverse elongated axis (18) which is equipped with two conical cogwheels (18a) which, in turn are arranged to co-operate with the corresponding cogwheel (19, 19a) in the end of the adjusting screws (12, 12a) of respective pair.

9. The calibrator according to Claim 8, **characterized in that** the calibrator is inserted into a vacuum calibrator tank (3), the inner side walls of which is equipped with a large number of cooling water spray-nozzles (5) which are directed in between the four transverse rods (8, 8a, 9, 9a) of the four units, and that the manipulating mechanisms (14, 15) for all pairs of adjusting screws (12, 12a; 13, 13a) of the calibrator, are arranged on the outer side of one side wall of said vacuum calibrator tank (3).

10. The calibrator according to Claim 9, **characterized in that** the vacuum calibrator tank (3) is arranged in the production line immediately after the extruding die (2) and has an inlet for the extruded thermoplastic profile (1), in which inlet is arranged a cooling ring (20) with a cooling mantle and a medium (21) to generate between the thermoplastic profile (1) and the cooling ring (20) a vacuum which is greater than the vacuum which is maintained in the vacuum calibrator tank (3).

11. The calibrator according to claims 9 or 10, **characterized in that** immediately after the inlet to the vacuum calibrator tank (3), a water cooling bath (23) and a replaceable calibrator (4a) having fixed dimensions is arranged.

12. The calibrator according to any of the preceding claims, **characterized in that** in association with each operating mechanism (14, 15) a position indicator is arranged, which shows in millimetres the distance between the pair of units of rods (8, 8a and 9, 9a, respectively) which are manipulated by the operating mechanism (14, 15) in question.

## Patentansprüche

1. Ein Kalibrator zur Verwendung für die Produktion von extrudierten hohlen thermoplastischen Profilen (1), welche hauptsächlich einen rechteckigen Querschnitt aufweisen, wobei der Kalibrator einen stationären Rahmen (7) aufweist, welcher wiederum eine große Anzahl lamellarer Kalibratorplatten (S) trägt, welche mit einem Abstand voneinander angeordnet sind, so dass sie zusammen einen Kanal (K) bilden, der durch den Kalibrator verläuft, wobei der Querschnitt dieses Kanals die äußere Form des herzustellenden thermoplastischen Profils (1) bestimmt, wobei zumindest eine der Wände des Kanals (K) durch ein bewegliches Teil (8; 9) der Kalibratorplatte (S) beschränkt ist, wobei das Teil in einer senkrechten Richtung zu dem Kanal einstellbar ist, um den Kalibrator (4) an thermoplastische Profile (1) anzupassen, die unterschiedliche Höhe- /Breiteverhältnisse aufweisen,
**dadurch gekennzeichnet, dass**
- jede zweite Kalibratorplatte ein Paar horizontaler Stangen (8, 8a) umfasst, welche sowohl aufeinander zu- als auch voneinander wegbewegt werden können, und
- jede andere Kalibratorplatte ein Paar vertikaler Stangen (9, 9a) umfasst, welche sowohl aufeinander zu- als auch voneinander wegbewegt werden können,
um den Kalibrator an die Herstellung von thermoplastischen Profilen (1) mit unterschiedlichen Höhen und Breiten anzupassen.

2. Kalibrator nach Anspruch 1, **dadurch gekennzeichnet, dass** jede Kalibratorplatte (S) eine zentrale rechteckige Spalte aufweist, die die maximale Ausdehnung und Form des Querschnitts des Kalibratorkanals (K) bestimmt, in welchem Fall eine der Seitenwände des Spalts durch eine Stange (8, 9) bestimmt wird, welche in der Ebene oder parallel zu der Ebene der Kalibratorplatte (S) beweglich ist, in der Richtung zu und von der Seitenwand gegenüber der Spalte.

3. Kalibrator nach Anspruch 2, **dadurch gekennzeichnet, dass** alle beweglichen Stangen (8, 8a, 9, 9a), welche die Position einer der Wände des Kanals (K) bestimmen, an ihren Enden fixiert sind, um mittels eines Paars Balken (10, 10a, 11, 11a), die entlang des Kalibrators angeordnet sind, Einheiten zu bilden.

4. Kalibrator nach Anspruch 3, **dadurch gekennzeichnet, dass** beide Einheiten vertikaler Stangen (9, 9a) und/oder beide Einheiten horizontaler Stangen (8, 8a) mit Mechanismen zusammengebunden sind, welche eine Einstellung der Entfernung zwischen den zwei Einheiten ermöglichen.

5. Kalibrator nach Anspruch 4, **dadurch gekennzeichnet, dass** die oben genannten Mechanismen, welche die zwei parallelen Einheiten der Stangen (8, 8a; 9, 9a) zusammenbinden, zumindest zwei parallele Einstellschrauben (12, 12a; 13, 13a) umfassen, welche in zwei Gewindelöchern in dem längsgerichteten Balken (10, 10a; 11, 11a) beider Einheiten eingefügt sind, und in dem stationären Rahmen (7) des Kalibrators beherbergt sind, wobei die Einstellschrauben (12, 12a; 13, 13a) in einer Hälfte ihrer Länge mit einem Rechtsgewinde und in der anderen Hälfte ihrer Länge mit einem Linksgewinde ausgerüstet sind und wobei beide Einstellschrauben (12, 12a; 13, 13a), welche ein paralleles Paar von Stangeneinheiten (8, 8a; 9, 9a) steuern, so angeordnet sind, dass sie durch einen gemeinsamen Betriebsmechanismus (jeweils 14 und 15) betrieben werden.

6. Kalibrator nach Anspruch 5, **dadurch gekennzeichnet, dass** jedes Paar von parallelen Stangeneinheiten (8, 8a; 9, 9a) durch drei Paare von Einstellschrauben (12, 12a; 13, 13a) gesteuert werden, welche nahe jedem Ende angeordnet sind, und einer dritten in der Mitte des Paars paralleler Einheiten.

7. Kalibrator nach Anspruch 1, **dadurch gekennzeichnet, dass** die Stangen (8a) in der Einheit, welche die untere Seite des Kanals (K) bestimmt, ein Mittelteil bilden, welches nach unten gebogen ist und, als Ergebnis, die äußere Bodenwand des thermoplastischen Profils (1) abgerundet ist, welches durch den Kalibrator (4) geführt wird.

8. Kalibrator nach Anspruch 5, **dadurch gekennzeichnet, dass** der Mechanismus für die Steuerung (14, 15) eines Paars von Einstellschrauben (12, 12a; 13, 13a) eine Kurbel oder ein Rad umfasst, welches entweder direkt an einer der Einstellschrauben (12; 13) befestigt ist, welche wiederum an die andere Einstellschraube (12a; 13a) über einen Gurt oder eine Kette befestigt ist, welche über gleichgroße Gurtscheiben oder Zahnräder geführt wird, welche nahe dem Ende jeder Einstellschraube (12, 12a, 13, 13a) befestigt sind, so dass sie einer starken Torsion widerstehen können, oder an einer querlaufenden verlängerten Achse (18) befestigt sind, welche mit zwei konischen Zahnrädern (18a) ausgerüstet sind, welche wiederum zum Zusammenwirken mit dem entsprechenden Zahnrad (19, 19a) am Ende der Einstellschrauben (12, 12a) des jeweiligen Paars angeordnet sind.

9. Kalibrator nach Anspruch 8, **dadurch gekennzeichnet, dass** der Kalibrator in einen Vakuumkalibratortank (3) eingefügt wird, dessen innere Seitenwände mit einer großen Anzahl von Kühlwasser-Spraydüsen (5) ausgerüstet sind, welche zwischen die vier querlaufenden Stangen (8, 8a, 9, 9a) der vier Einheiten gerichtet sind, und **dadurch**, dass die Steuermechanismen (14, 15) für alle Paare von Einstellschrauben (12, 12a; 13, 13a) des Kalibrators auf der äußeren Seite von einer Seitenwand des Vakuumkalibratortanks (3) angeordnet sind.

10. Kalibrator nach Anspruch 9, **dadurch gekennzeichnet, dass** der Vakuumkalibratortank (3) in der Herstellungslinie direkt nach der Extrusionsdüse (2) angeordnet ist und einen Einlass für das extrudierte thermoplastische Profil (1) aufweist, in welchem Einlass ein Kühlring (20) mit einem Kühlmantel und einem Medium (21) angeordnet ist, um zwischen dem thermoplastischen Profil (1) und dem Kühlring (20) ein Vakuum zu erzeugen, welches größer als das Vakuum ist, welches in dem Vakuumkalibratortank (3) aufrechterhalten wird.

11. Kalibrator nach Anspruch 8 oder 10, **dadurch gekennzeichnet, dass** direkt nach dem Einlass zu dem Vakuumkalibratortank (3) ein Wasserkühlbad (23) und ein ersetzbarer Kalibrator (4a) mit starren Dimensionen angeordnet sind.

12. Kalibrator nach irgendeinem der vorherigen Ansprüche, **dadurch gekennzeichnet, dass** in Verbindung mit jedem Betriebsmechanismus (14, 15) ein Positionsindikator angeordnet ist, welcher in Millimetern die Entfernung zwischen dem Paar von Stangeneinheiten (jeweils 8, 8a und 9, 9a) anzeigt, welche durch den fraglichen Betriebsmechanismus (14, 15) gesteuert werden.

## Revendications

1. Conformateur à utiliser pour la production de profilés (1) thermoplastiques creux extrudés qui ont principalement une section transversale rectangulaire, ledit conformateur a une charpente fixe (7) qui, à son tour, supporte un grand nombre de plaques lamellaires (S) de conformateur qui sont agencées de manière distante les unes des autres de telle manière qu'elles forment ensemble un canal (K) qui passe à travers le conformateur, la section transversale dudit canal détermine la forme extérieure du profilé thermoplastique (1) à fabriquer, dans lequel au moins l'une des parois du canal (K) est délimitée par une partie mobile (8 ; 9) de la plaque (S) de conformateur, la partie étant réglable dans une direction perpendiculaire au canal, afin d'adapter le conformateur (4) aux profilés thermoplastiques (1) qui ont différents rapports hauteur/largeur, **caractérisé en ce que** :
chaque deuxième plaque de conformateur comprend une paire de tiges horizontales (8, 8a) qui peuvent toutes les deux être rapprochées et éloignées l'une de l'autre, et
chaque autre plaque de conformateur comprend une paire de tiges verticales (9, 9a) qui peuvent toutes les deux être rapprochées et éloignées l'une de l'autre,
afin d'adapter le conformateur à la production de profilés thermoplastiques (1) de différentes hauteurs et largeurs.

2. Conformateur selon la revendication 1, **caractérisé en ce que** chaque plaque (S) de conformateur a un écartement central rectangulaire qui détermine la dimension et la forme maximales de la section transversale du canal (K) de conformateur, auquel cas l'une des parois latérales de l'écartement est déterminée par une tige (8 ; 9) qui est mobile dans le plan ou parallèle au plan de la plaque (S) de conformateur, dans la direction vers et à partir de la paroi latérale opposée à l'écartement.

3. Conformateur selon la revendication 2, **caractérisé en ce que** toutes les tiges mobiles (8, 8a, 9, 9a), qui déterminent la position de l'une des parois du canal (K), sont fixées à leurs extrémités pour former des unités au moyen d'un couple de barres (10, 10a, 11, 11a) qui sont placées le long du conformateur.

4. Conformateur selon la revendication 3, **caractérisé en ce que** les deux unités de tiges verticales (9, 9a) et/ou les deux unités de tiges horizontales (8, 8a) sont liées entre elles par des mécanismes qui permettent de régler la distance entre les deux unités.

5. Conformateur selon la revendication 4, **caractérisé en ce que** les mécanismes susmentionnés, qui lient ensemble les deux unités parallèles de tiges (8, 8a ; 9, 9a), comprennent au moins deux vis de réglage parallèles (12, 12a ; 13, 13a) qui sont insérées dans deux trous taraudés dans les barres longitudinales (10, 10a ; 11, 11a) des deux unités et logées dans la charpente fixe (7) du conformateur, lesdites vis de réglage (12, 12a ; 13, 13a), sur une moitié de leur longueur, sont équipées de filetage à droite et, sur l'autre moitié de leur longueur, sont équipées de filetage à gauche, et **en ce que** les deux vis de réglage (12, 12a ; 13, 13a), qui manipulent une paire parallèle d'unités de tige (8, 8a ; 9, 9a), sont agencées de sorte à être actionnées par une mécanisme d'actionnement partagé (14 et 15, respectivement).

6. Conformateur selon la revendication 5, **caractérisé en ce que** chaque paire d'unités parallèles de tiges (8, 8a ; 9, 9a) sont manipulées par trois paires de vis de réglage (12, 12a ; 13, 13a) qui sont agencées l'une à côté de chaque extrémité et une troisième au milieu de la paire d'unités parallèles.

7. Conformateur selon la revendication 1, **caractérisé en ce que** les tiges (8a) dans l'unité qui détermine le côté inférieur du canal (K) forment une partie médiane qui est arquée vers le bas et, par conséquent, la paroi de fond extérieure du profilé thermoplastique (1) qui est guidée à travers le conformateur (4) est arrondie.

8. Conformateur selon la revendication 5, **caractérisé en ce que** le mécanisme de manipulation (14, 15) d'une paire de vis de réglage (12, 12a ; 13, 13a) comprend une manivelle ou un galet, qui est soit fixé directement à l'une des vis de réglage (12 ; 13), qui, à son tour, est fixée à l'autre vis de réglage (12a ; 13a) par l'intermédiaire d'une courroie ou une chaîne qui est guidée sur des poulies à courroies ou des roues dentées de même taille, qui sont fixées près de l'extrémité de chaque vis de réglage (12, 12a ; 13, 13a), de manière à pouvoir résister à une forte torsion, soit fixé à un axe transversal allongé (18) qui est équipé de deux roues dentées coniques (18a) qui, à leur tour sont agencées pour coopérer avec la roue dentée correspondante (19, 19a) dans l'extrémité des vis de réglage (12, 12a) de la paire respective.

9. Conformateur selon la revendication 8, ledit conformateur étant **caractérisé en ce qu'**il est inséré dans une cuve sous vide (3) de conformateur, dont les parois latérales intérieures sont dotées d'un grand nombre de buses (5) de pulvérisation d'eau de refroidissement qui sont dirigées entre les quatre tiges transversales (8, 8a, 9, 9a) des quatre unités, et **en ce que** les mécanismes de manipulation (14, 15) pour toutes les paires de vis de réglage (12, 12a ; 13, 13a) du conformateur, sont agencés sur le côté extérieur d'une paroi latérale de ladite cuve sous vide (3) de conformateur.

10. Conformateur selon la revendication 9, **caractérisé en ce que** la cuve sous vide (3) de conformateur est agencée dans la ligne de production immédiatement après la filière d'extrusion (2) et a une entrée pour le profilé thermoplastique extrudé (1), entrée dans laquelle est agencée une bague de refroidissement (20) avec un manteau de refroidissement et un moyen (21) pour générer entre le profilé thermoplastique (1) et l'anneau de refroidissement (20) un vide qui est plus grand que le vide qui est maintenu dans la cuve sous vide (3) de conformateur.

11. Conformateur selon les revendications 9 ou 10, **caractérisé en ce que**, immédiatement après l'entrée à la cuve sous vide (3) de conformateur, un bain (23) de refroidissement à eau et un conformateur amovible (4a) ayant des dimensions fixes sont agencés.

12. Conformateur selon l'une quelconque des revendications précédentes, **caractérisé en ce que**, en association avec chaque mécanisme de manipulation (14, 15), un indicateur de position est agencé, qui montre en millimètres la distance entre la paire d'unités de tiges (8, 8a et 9, 9a, respectivement) qui sont manipulées par le mécanisme d'actionnement (14, 15) en question.
